Europäisches Patentamt

European Patent Office

Office européen des brevets

(19)

(11) Publication number: **0 073 563**
A2

(12)

# EUROPEAN PATENT APPLICATION

(21) Application number: 82303685.0

(22) Date of filing: 14.07.82

(51) Int. Cl.³: **B 60 R 25/02,** B 60 R 25/06

(30) Priority: 28.08.81 US 297232

(43) Date of publication of application: 09.03.83
Bulletin 83/10

(84) Designated Contracting States: DE FR GB

(71) Applicant: GENERAL MOTORS CORPORATION,
General Motors Building 3044 West Grand Boulevard,
Detroit Michigan 48202 (US)

(72) Inventor: Kramer, Richard Lee, 422 Hunter, Saginaw
Michigan 48602 (US)

(74) Representative: Breakwell, John Neil Bower et al, Patent
Section General Motors Limited P.O. Box 242 Delaware
Drive, Milton Keynes MK15 8HA (GB)

(54) Position control mechanisms for vehicle ignition locks.

(57) A steering column-mounted ignition lock mechanism 16 and a floor-mounted transmission shift lever 36 have an interconnecting mechanism which prevents the steering column 10 from being locked unless the transmission shift lever is in the «Park» position. This mechanism also prevents the transmission shift lever from being moved from the «Park» position when the ignition lock mechanism is in the «Lock» position. The interconnecting mechanism generally comprises a pair of slidable pins 18 and 32 which assume relative longitudinal positions in accordance with the positions of the ignition lock mechanism and transmission shift lever respectively, and include respective recess portions 24 and 38 for a latching ball 26, to permit movement of the ignition lock mechanism only in a predetermined relative position of the slidable pins.

POSITION CONTROL MECHANISMS
FOR VEHICLE IGNITION LOCKS

This invention relates to a position control mechanism as specified in the preamble of claim 1.

It is well-known in motor vehicles to provide a mechanism for a steering column-mounted ignition lock and transmission shift mechanism which prevents the ignition lock from being placed in the "Lock" position unless the shift lever has been moved to the "Park" position. With the use of a floor-mounted transmission shift lever, it is generally the custom to utilize a backdrive mechanism similar to the previously known transmission shift control mechanisms, thereby providing a mechanical connection between the transmission shift lever and the steering column. The backdrive mechanism can be interconnected with the ignition mechanism utilizing previously known structures. It is also possible to use a position control mechanism such as that shown in U.S. Patent No. 4,232,538 issued to Detloff, Jr. on November 11, 1980: this mechanism makes use of the previously known backdrive mechanisms but incorporates a unique pin and slot connection.

There is a need for a position control mechanism which, in place of the previously used rotary tube backdrive mechanisms, can make use of a simple Bowden wire or cable mechanism.

To this end, a position control mechanism in accordance with the present invention is characterised by the features specified in the characterising portion of claim 1.

In a preferred arrangement in accordance with the present invention, a Bowden cable mechanism operates a slidable pin member which is disposed in a housing for reciprocation parallel to a slidable pin member that is actuable by an ignition lock mechanism. These pins are positionable in response to transmission ratio selection and ignition lock movement, respectively, and are interconnected by a latching ball which requires predetermined selection patterns. These patterns require that the transmission be placed in the "Park" position prior to the ignition lock being moved to the "Lock" position (in many ignition lock mechanisms, the key cannot be removed until the "Lock" position has been attained). Once the "Lock" position has been reached, with the present arrangement the transmission selector lever cannot be moved from the "Park" position until the ignition lock mechanism has been moved from the "Lock" position.

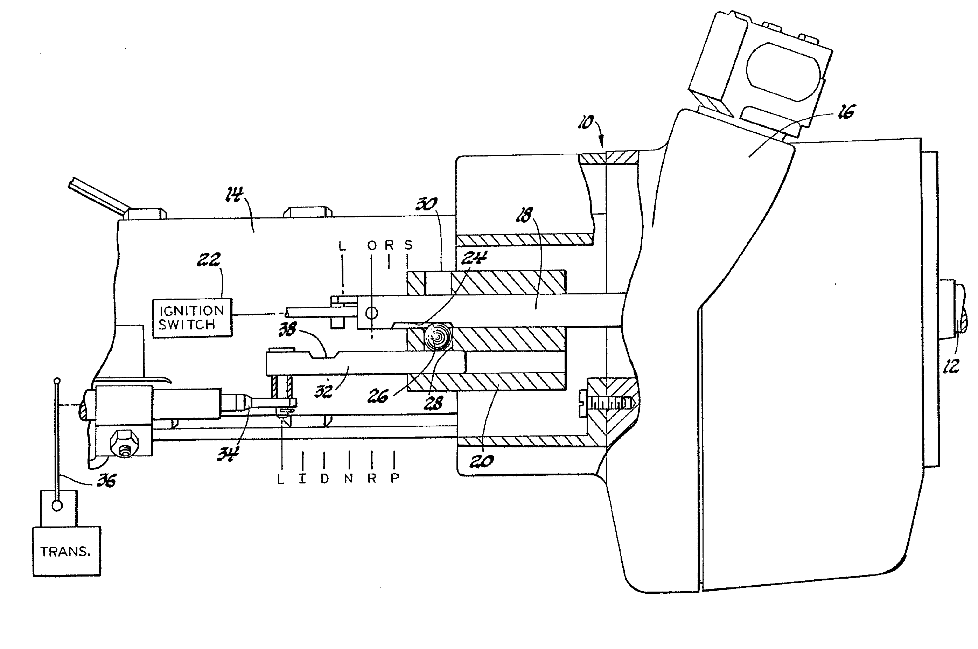

The drawing is a fragmentary elevational view, partially broken away and in section, of a vehicular steering column incorporating one embodiment of a position control mechanism in accordance with the present invention, and including a diagrammatic representation of a transmission shift mechanism.

As is shown in the drawing, a steering column, generally designated 10, rotatably supports a steering shaft 12 which extends longitudinally through a mast jacket 14 to be connected in a conventional manner to a steering gear. The steering column 10 also includes an ignition lock mechanism 16 which may be constructed similarly to the lock mechanism shown in U.S. Patent No. 3,648,490 issued to Kimberlin et al. on March 14, 1972. The ignition lock mechanism operates an ignition pin 18 which is slidably mounted in a housing-like guide member 20.

The ignition pin 18 is connected to a conventional ignition switch 22, and in response to movement of the lock mechanism 16 is selectively positionable in a "Lock" position "L", an "Off" position "O", a "Run" position "R" and a "Start" position "S", these being the conventional positions for most ignition lock mechanisms. Other positions, such as an accessory operation position, can also be accommodated.

The ignition pin 18 has formed therein a lock recess 24 which, as is shown in the drawing, will accommodate a portion of a latching ball 26 which is disposed in an opening 28 formed in the guide member 20. The opening 28 extends to the outer surface of the guide member 20, as shown at 30, to permit assembly of the latching ball 26 prior to the insertion of the ignition pin 18 into the guide member 20. The recess 24 extends for a predetermined longitudinal dimension of the pin 18 so that the recess 24 can accommodate the ball 26 in the "O", "R" and "S" positions of the lock mechanism 16. However, the recess 24 will not accommodate the ball 26 when the ignition pin 18 is moved to the "L" ("Lock") position by the ignition lock mechanism 16.

Also slidably disposed in the guide member 20 is a transmission shift pin 32 which is connected by a backdrive cable 34 to a floor-mounted transmission shift control lever 36. The transmission shift control lever 36 may be constructed as described in U.S. Patent No. 4,249,404 issued to Kimberlin on February 10, 1981. As is well-known, transmission shift control levers are movable to provide a plurality of transmission ratio conditions such as Lock "L", Intermediate "I", Drive "D", Neutral "N", Reverse "R" and Park "P". Both Park "P" and Neutral "N" are non-drive conditions. The Park "P" position is selected when mechanical latching of the transmission output shaft is desired, this being the position that is selected by the operator prior to leaving the vehicle. It is also the condition permitting removal of the ignition key from the ignition lock mechanism.

The transmission shift pin 32 is movable by the backdrive cable 34 in accordance with the position of the transmission control lever 36, and therefore assumes the same positions as the operator selects for the transmission. The transmission shift pin 32 has a "Park" recess 38 which is alignable with the latching ball 26 when the transmission lever 36 and therefore the transmission shift pin 32 is in the "P" ("Park") position. In the "P" position, the "Park" recess 38 will accommodate a portion of the latching ball 26 in a manner similar to that described above for the lock recess 24. Therefore, when the transmission shift pin 32 is in the "P" position and the ignition pin 18 is in the "O", "R" or "S" position, the latching ball 26 is freely movable in the opening 28 between the recesses 24 and 38. However, if the transmission shift pin 32 is in a position other than "P", the ignition pin 18 and therefore the lock mechanism 16 cannot be moved to the "L" position, and with most mechanisms the operator will not be able to remove the ignition key. If the transmission shift pin 32 is in the "P" position, the ignition pin 18 can be moved to the "L" position, and the ignition key can be removed. If the ignition pin 18 is retained in the "L" position, the transmission shift pin 32 cannot be moved from the "P" position, since the latching ball 26 cannot be removed from the recess 38 due to the presence of the unrecessed surface of the ignition pin 18. Therefore it is necessary to move the ignition pin 18 from the "Lock" position, so that the recess 24 can accept the latching ball 26, before the transmission can be moved from the "P" position.

Since it is desirable to start the vehicle engine only when the transmission is in Neutral "N" or Park "P", a conventional Neutral/Start switch can, in conventional fashion, be incorporated in the transmission or be positioned for operation in conjunction with the backdrive cable 34.

With the present position control mechanism, therefore, the ignition lock mechanism 16 cannot be moved to a locking position prior to the transmission being moved to the "Park" position, and, subsequent to the ignition locking procedure, the transmission cannot be removed from the "Park" position until the ignition lock mechanism 16 has been moved to a position other than "L".

The present invention thus provides an improved position-controlled mechanism for interconnecting a steering column mounted ignition lock mechanism and a floor-mounted transmission shift control mechanism wherein the position control mechanism incorporates a pair of sliding pin members which respond to ignition lock movement and transmission ratio selection respectively, and which pins are interconnected by a ball latching mechanism requiring a predetermined sequence of movements if ignition locking is desired.

Claims:

1. A position control mechanism for use in a steering column-mounted lock cylinder mechanism (16) having a plurality of positions including a "Lock" position ("L"), and a floor-mounted transmission shift control mechanism (36) having a plurality of positions including a "Park" position ("P"), including interlock means (20,24,26,38) controlling the "Lock" and "Park" positions in dependence upon the relative positions of a pair of spaced members (18 and 32), characterised in that the position control mechanism comprises a guide member (20) secured to the steering column (10), an ignition pin member (18) slidably disposed in the guide member and including an axially extending "Lock" recess (24) and movable to a plurality of positions including "Lock" by the ignition lock mechanism (16), a transmission shift pin member (32) slidably disposed in the guide member and including an axially extending "Park" recess (38) facing the "Lock" recess in the ignition pin member and movable to a plurality of positions including "Park" by the transmission shift control mechanism (36), and interlock means (26) disposed in the guide member for engagement in the "Lock" recess in the ignition pin member, for preventing the ignition pin member from moving to the "Lock" position unless the "Park" recess is engaged, for engagement in the "Park" recess in the shift pin member when the shift pin member is in the "Park" position, for preventing movement of the shift pin member from the "Park" position when the ignition pin member is in the "Lock" position, and movable between the recesses when the ignition pin member is out of the "Lock" position and the shift pin member is in the "Park" position.

2. A position control mechanism according to claim 1, characterised in that the interlock means comprises a ball (26) disposed in an opening (28) in the guide member (20), such that a portion of the ball is selectively engageable in the "Lock" recess (24) in the ignition pin member (18), and a portion of the ball is selectively engageable in the "Park" recess in the shift pin member (32).

0073563

IGNITION SWITCH

TRANS.